(19)

**Europäisches Patentamt**
**European Patent Office**
**Office européen des brevets**

(11) **EP 4 491 588 A1**

(12) **EUROPEAN PATENT APPLICATION**
published in accordance with Art. 153(4) EPC

(43) Date of publication:
**15.01.2025 Bulletin 2025/03**

(21) Application number: **23717590.6**

(22) Date of filing: **10.03.2023**

(51) International Patent Classification (IPC):
$C02F\ 9/00^{(2023.01)}$     $B01D\ 1/16^{(2006.01)}$
$C02F\ 1/04^{(2023.01)}$     $C02F\ 1/14^{(2023.01)}$
$C02F\ 1/44^{(2023.01)}$     $C02F\ 1/52^{(2023.01)}$
$C02F\ 1/66^{(2023.01)}$     $C02F\ 101/10^{(2006.01)}$
$C02F\ 101/16^{(2006.01)}$     $C02F\ 103/06^{(2006.01)}$
$C02F\ 1/12^{(2023.01)}$

(52) Cooperative Patent Classification (CPC):
**C02F 9/00; B01D 1/0035; B01D 1/14; B01D 1/16;**
C02F 1/04; C02F 1/12; C02F 1/14; C02F 1/441;
C02F 1/444; C02F 1/5245; C02F 1/66;
C02F 2101/101; C02F 2101/16; C02F 2103/06;
C02F 2303/22

(86) International application number:
**PCT/ES2023/070136**

(87) International publication number:
**WO 2023/170328 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.03.2022 ES 202230203**

(71) Applicants:
• **QUÍMICA TÉCNICA ECOLÓGICA, S.L.U.**
**08221 Terrassa (Barcelona) (ES)**

• **Beda Water Engineering, S.L.**
**08860 Castelldefels (ES)**

(72) Inventors:
• **FERNÁNDEZ GARCÍA, Gustavo**
**08221 TERRASSA (BARCELONA) (ES)**
• **VALERO HERNÁNDEZ, Antonio**
**08221 TERRASSA (BARCELONA) (ES)**
• **MELERO TALAVERA, Sergio**
**08221 TERRASSA (BARCELONA) (ES)**

(74) Representative: **Isern Patentes y Marcas S.L.**
**Avda. Diagonal, 463 Bis, 2°**
**08036 Barcelona (ES)**

(54) **PROCESS FOR THE TREATMENT OF WATER AND AQUEOUS SUSPENSIONS WITH HIGH
SALT, AMMONIA, HYDROGEN SULFIDE AND ORGANIC MATTER CONTENTS**

(57)     The present invention relates to a process for the treatment of water and aqueous suspensions with high loads of ammonia, hydrogen sulfide, salts and organic matter, such as leachate from landfills, digestates from anaerobic digestion plants, aqueous sludge, saline rejects from reverse osmosis plants, liquid manure and all types of aqueous solutions and/or suspensions with high loads of inorganic/organic salts and organic matter and the reagents used therein. Said process allows the separation of salts and organic matter from the aqueous suspension, evaporating the solvent from the solutes, so that both the salts and the organic matter can be reused in other production processes, further obtaining a high volume of water (or other solvent) with low conductivity and organic load, suitable for being reused in different industrial processes.

FIG. 1

STEP 1: SEPARATION OF ALKALINITY AND $H_2S$

STEP 2: SEPARATION OF PHOSPHORUS

**(Cont. next page)**

**STEP 3:** SEPARATION OF
AMMONIA: RO1

**STEP 4:** NEUTRALIZATION P1 + RO2

```
FL2: Liquid fraction 2 to STEP 3
10.5≤pH≤11.5
```

RO1

```
P1: Permeate
10.5≤pH≤11.5
```

```
P1: Permeate
6.5≤pH≤7.0
```

RO2

```
R1:Reject RO1
10.5≤pH≤11.5
```

Acid : HNO₃

```
P2: Permeate RO2
Process water
```

**STEP 5:** NEUTRALIZATION R2 + UF

```
R1:Reject RO1
6.5≤pH≤7.0
```

UF1

```
P3: UF permeate
To crystallizer
```

```
P2: Reject RO2
To crystallizer
```

```
R3: UF reject
TO STEP 1
```

## Description

### Object of the invention

As expressed in the title of this specification, the present invention relates to a process for the treatment of water and aqueous suspensions with high loads of ammonia, hydrogen sulfide, salts and organic matter, such as leachate from landfills, digestates from anaerobic digestion plants, aqueous sludge, saline rejects from reverse osmosis plants, liquid manure and all types of aqueous solutions and/or suspensions with high loads of inorganic/organic salts and organic matter and the reagents used therein. Said process allows the separation of salts and organic matter from the aqueous suspension, evaporating the solvent from the solutes, so that both the salts and the organic matter can be reused in other production processes, further obtaining a high volume of water (or other solvent) with low conductivity and organic load, suitable for being reused in different industrial processes.

### Background of the invention

Nowadays, industries that generate process water with high saline and organic loads are treated by waste managers, using all types of technologies: physicochemical treatments, biological treatments, evaporation systems, membrane treatment, oxidation processes, etc., but none of them manages to separate and reuse each of the fractions present in the aqueous suspensions of organic matter and salts. The same occurs with the leachate generated in MSW (municipal solid waste) landfills, or the liquid manure from intensive farming and the digestate generated in anaerobic digesters, which are mostly used directly as an organic amendment in agriculture.

One of the methods that manages to separate the water (or other solvent) from the mixture of salts + organic matter is evaporation by aerosol emission or spray drying.

A standard textbook on spray drying technology is by Masters, Keath: Spray Drying Handbook, 5th edition, (Longman Scientific&Technical 1991).

There are different patents referring to spray drying processes such as patent 5,632,100, which describes the use of a fluidized bed at the bottom of the drying chamber of a spray dryer, as well as particle collector equipment, or document WOP 97/14288, where the incorporation of rigid gas filters inside the spray drying chamber is suggested. Patent DK99/00304 describes a spray drying process and installation.

All spray dryer manufacturers use the hot air generated in combustion processes (vapor, fuel, gas or thermal oil), either directly or indirectly, as a heat source. In the first case, the spray dryer uses the same combustion gases of liquid or gaseous fuels to heat the drying air. This mixture comes into direct contact with the product to be dried.

In the case of indirect drying, any thermal source is used to heat the drying air through a heat exchanger. In this case, only atmospheric and/or previously filtered hot air is used.

The use of combustion gases of liquid or gaseous fuels generate the following reaction:

$$CH_4 + 2\ O_2 \rightarrow CO_2 + 2\ H_2O \text{ (Example for natural gas combustion)}$$

Therefore, for each mole of methane consumed, two moles of water are generated. In direct drying, this supply of humidity to the hot drying air causes its evaporation capacity to be much lower than that of atmospheric air heated at the same temperature, whereby energy consumption in the first case is very high.

In the case of indirect drying, the yield is still lower than that of direct drying due to the energy loss caused by the low utilization of the heat exchanger.

In no case is it used as a spray drying vehicle, a hot and dry air stream coming from a compressor, working at low pressure, together with a second hot air stream generated through solar energy as a drying vehicle. In this case, hot and very dry air with a high water adsorption capacity is achieved.

Nor does any document disclose the pretreatment of aqueous solutions with high organic matter, ammonia ($NH_3$), hydrogen sulfide ($H_2S$) and inorganic/organic salt contents before entering the crystallization system, which makes it possible to obtain and recover salts, organic matter and water.

### Description of the invention

The objective of the present invention, therefore, is to provide a process for the treatment of aqueous suspensions/solutions having a high ammonia and hydrogen sulfide content, together with inorganic/organic salts as well as dissolved organic matter, obtaining three fractions; a mixture of part of the inorganic/organic salts contained in the suspension and part of the organic matter, another mixture of the solvent, mainly water, and a third mixture of ammonia in the form of organic/inorganic salt together with the rest of the salts present in the aqueous solution not separated in the first fraction. The present invention also discloses the reagents necessary in said process.

The present invention discloses a process for the treatment of aqueous suspensions having a high value of conductivity, $NH_3$, $H_2S$, phosphorus, alkalinity and COD, such as a landfill leachate, a liquid manure or the digestate form an anaerobic digester, comprising the following steps:

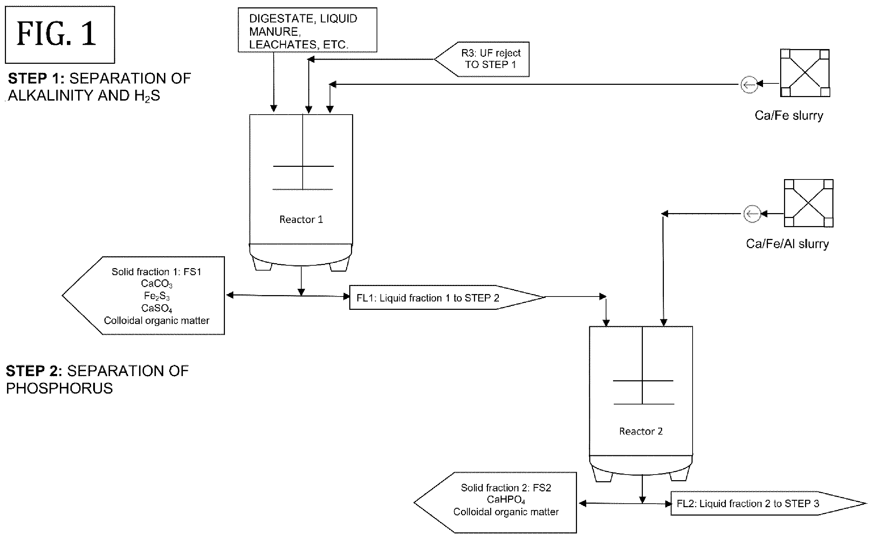

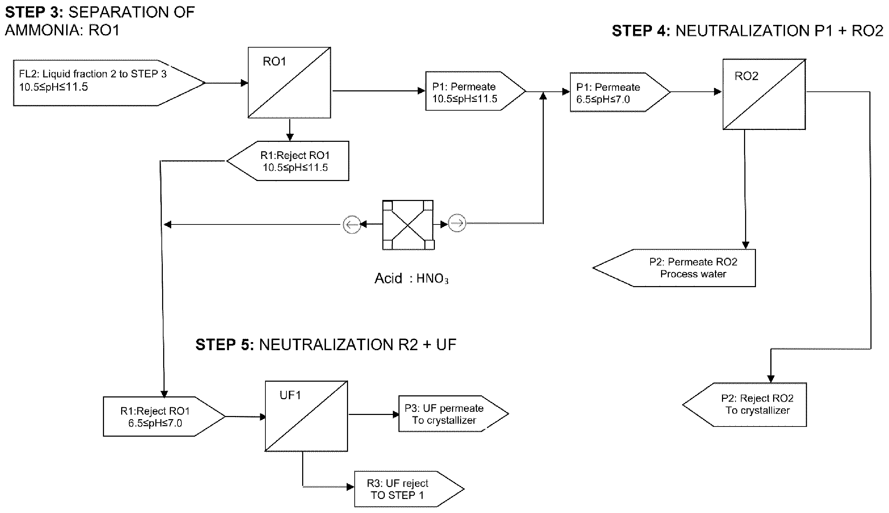

**STEP 1:** Separating the alkalinity and hydrogen sulfide from the aqueous suspension. By adding $Ca^{2+}$ in the form of $Ca(OH)_2$ or CaO, the $H_2CO_3/HCO_3$- content is separated and transformed into a $CaCOs$ precipitate. The addition of $Fe^{3+}$ manages to separate, at alkaline pH, colloidal organic matter and $H_2S$ in the form of an $Fe_2S_3$ precipitate. For this purpose, a precipitation reactor (FIG 1-PHASE A) will be used, where there will be added on the aqueous suspension to be treated (liquid manure, digestate, leachate, etc.), a mixture of $Ca(OH)_2$ or CaO, together with iron salts; $Fe_2(SO_4)_3$ and/or $FeCl_3$, in a proportion by weight percentage ranging from 50:50 to 99:1 in Ca:Fe, respectively. With this mixture of Ca:Fe, a slurry is prepared with water, which is what is added to the aqueous suspension, until reaching a value of $9.5 \leq pH \leq 10.0$. The addition of the $Ca^{2+}/Fe^{3+}$ slurry, either as $Ca(OH)_2 + Fe_2(SO_4)_3$ and/or $FeCl_3$ or as CaO + $Fe_2(SO_4)_3$ and/or $FeCl_3$, on the reactor 1, with stirring, generates the formation of a mixed $CaCOs + Fe_2S_3 + CaSO_4$ precipitate + part of the colloidal organic matter present in the aqueous suspension, FS1 (solid fraction 1), which precipitate is separated from the liquid fraction, FL1 (liquid fraction 1), by decantation. This precipitate, FS1, is quantitatively formed at values of $9.5 \leq pH \leq 10.0$, wherein $NH_3$ makes up 99 % of the $NH_3/NH_4^+$ species and there is less than 1% of the $NH_4^+$ ion. After decantation in reactor 1 (FIG 1), the precipitate (FS1) is mechanically separated from the liquid fraction (FL1), the latter serving as feed for STEP 2.

**STEP 2:** Separating phosphorus from liquid fraction 1, FL1, upon exiting STEP 1, said phosphorus being found in FL1 as $H_2PO_4^-/HPO_4^{2-}$ and at values of $9.5 \leq pH \leq 10.0$. By adding $Ca^{2+}$ in the form of $Ca(OH)_2$ or CaO, the phosphorus content, solubilized by the presence of $NH_3$ at basic pH, is transformed into calcium hydrogen phosphate, $CaHPO_4$, which is insoluble and easily separated by decantation. The addition of $Al^{3+}/Fe^{3+}$ salts together with $Ca^{2+}$ further manages to separate colloidal organic matter. To separate the phosphorus from FL1, a precipitation reactor (FIG 1-STEP 2) will be used, in which reactor there will be added to FL1 a mixture of $Ca(OH)_2$ or CaO, together with a mixture of aluminum and iron salts; $Al_2(SO_4)_3$, $Fe_2(SO_4)_3$, $AlCl_3$ and/or $FeCl_3$, in a proportion by weight percentage ranging from 50:25:25 to 98:1:1 in Ca:Al:Fe, respectively. With this mixture of Ca:Al:Fe, a slurry is prepared with water, which is what is added to reactor 2 on FL1, until reaching $10.5 \leq pH \leq 11.5$. The addition of the $Ca^{2+}/Al^{3+}/Fe^{3+}$ slurry, either as $Ca(OH)_2 + Al_2(SO_4)_3$ and/or $AlCl_3 + Fe_2(SO_4)_3$ and/or $FeCl_3$ or as CaO + $Al_2(SO_4)_3$ and/or $AlCl_3 + Fe_2(SO_4)_3$ and/or $FeCl_3$, on reactor 2, with stirring, generates, at $10.5 \leq pH \leq 11.5$, the formation of a mixed precipitate of $CaHPO_4$ + part of the colloidal organic matter present in the aqueous suspension, which precipitate is separated from the liquid fraction by decantation. This precipitate, FS2, is quantitatively formed at values of $10.5 \leq pH \leq 11.5$, wherein $NH_3$ makes up more than 99 % of the $NH_3/NH_4^+$ species and there is less than 1% of the $NH_4^+$ ion. After decantation in reactor 2 (FIG 1), the precipitate, FS2, is mechanically separated from liquid fraction 2, FL2, the latter serving as feed for STEP 3.

**STEP 3:** After the separation of the alkalinity/phosphorus/hydrogen sulfide + colloidal fraction from the organic matter and with the liquid fraction output from STEP 2, FL2, at a value of $10.5 \leq pH \leq 11.5$, the ammonia will be separated. For this purpose, a system of membranes RO, RO1 (for reverse osmosis) will be used (FIG 1-STEP 3), which will filter FL2, obtaining two fractions: a permeate fraction, P1, free of organic matter and salts, and a reject fraction, R1, which will contain the soluble organic matter together with the salts that have not precipitated in STEPS 1 and 2, i.e., mainly sodium, potassium and magnesium salts. $NH_3$ is distributed in the same way in the two fractions obtained in RO1 fed with FL2: P1 and R1.

**STEP 4:** The fraction of the permeate obtained from the RO1 plant of STEP 3, P1, is neutralized to $6.5 \leq pH \leq 7.0$ with the addition of inorganic and/or organic acid. Work will be done with HCl, $H_2SO_4$, HNOs, $H_3PO_4$, etc., as inorganic acids, and with lactic acid, glycolic acid, oxalic acid, etc., as organic acids or mixtures of both. After neutralization of P1, this will enter a second system of membranes RO, RO2, which will generate two streams, a permeate stream, P2, corresponding to water with very low conductivity and a reject stream, R2, wherein, working at high pressures (70 to 84 bar), there is provided a neutral saline solution with a concentration close to 80g/l in ammonium salts. The ammonium salts obtained in R2 will be organic and/or inorganic, depending on the acid used in the neutralization of STEP 4. In that sense, an ammonium lactate solution can be obtained using lactic acid or ammonium nitrate if nitric acid is used as the acid in the neutralization of P1 in STEP 4.

**STEP 5:** The reject fraction R1 from plant RO1 is neutralized to $6.5 \leq pH \leq 7.0$ using the same organic/inorganic acid composition from STEP 4 on P1. This neutralized fraction R1 is subsequently treated by an ultrafiltration system. Working at a molecular weight cut-off of 10,000 to 100,000 Daltons, the ultrafiltration plant will manage to separate the high molecular weight organic matter as well as suspended solids of neutralized R1 in the reject stream, R3, while the permeate stream, P3, will contain a liquid solution with a saline concentration of about 80g/l and with the presence of soluble organic matter. The reject stream, R3, will be redirected to the head of the treatment system, step 1, while the permeate, P3, a fraction that represents more than 95% of the input flow rate to the UF plant, will feed the crystallization system by aerosol emission.

In short and starting from a liquid with high saline loads, $NH_3$, $H_2S$ and organic load, with the pretreatment described in STEPS 1 to 5, the following could be separated:

FS1: $CaCOs + Fe_2S_3$ + colloidal organic matter
FS2: $CaHPO_4$ + colloidal organic matter
P2: Water with very low conductivity and organic load in a volume close to 80% of the initial volume of FL1, for conductivity values of 10mS/cm in FL1
R2: Saline solution of ammonium salts at a maximum concentration of 80g/l.
P3: saline solution of sodium, potassium, magnesium and ammonium salts at a concentration of 80g/l, equal to 20% of the initial volume of FL1, for conductivity values of 10mS/cm in FL1.

**STEP 6,** object of this patent, consists of spray drying fractions R2 and P3 separately or together.

In the case of treatment of the ammonium salt solution of R2, a concentrated solution of only ammonium salts in the form of crystals together with a stream of air saturated with water vapor will be obtained, while in the case of treatment of fraction P3, an output of water (or other solvent) in the form of a saturated air stream in the form of water vapor and a second output of solid in the form of microcrystals will be obtained, containing the mixture of (organic + inorganic) salts and organic matter that had been dissolved in P3.

When the two fractions are treated together in the crystallizer by aerosol emission, R2+P3, an output of water (or other solvent) in the form of a saturated air stream in the form of water vapor and a second output of solid in the form of microcrystals will be obtained, containing the mixture of (organic + inorganic) salts and organic matter that had been dissolved in P3.

To carry out the spray drying of the present invention, work can be done with two types of nozzles, pneumatic nozzles fed with compressed air and the liquid to be spray dried, or hydraulic nozzles fed only with the liquid to be spray dried.

To carry out the spray drying of the suspension with pneumatic nozzles, a compressed air stream generated in a compressor and used to carry the liquid to be spray dried. The mixture of liquid (suspension/solution) and compressed air will pass through the inside of the pneumatic nozzles (internal mixing or external mixing) in such a way that a mixture of dry air coming from the compressor and droplets with a size of $10\mu m$ to $100\mu$, which will be propelled into the crystallization reactor in the form of a cloud, will be generated.

The pressure and flow rate of the compressed air used in spray drying will depend, in each case, on the type of pneumatic nozzle, which will indicate the titer of the cloud formed according to the pressure and flow rate of the liquid that feeds the nozzle and the flow rate and pressure of the air coming from the compressor.

This hot and dry air stream which will be mixed with the cloud of spray dried liquid inside the pneumatic nozzle comes from a compressor which, working at low pressure, between 1 and 5 bar, generates a volume of dry air at a given temperature.

The pump that propels the liquid into the pneumatic nozzles will work with a pressure of between 1 and 10 bar, which will depend on the performance indicated on the nozzle.

The pneumatic nozzles will preferably be fed with centrifugal pumps. The configuration thereof will depend on the working pressure, propulsion flow rate to the pneumatic nozzle and type of liquid to be pumped (viscosity, presence of solids, temperature, pH, etc.).

In each case, the air flow and water flow will be controlled at the crystallization reactor inlet by an assembly which includes, before the inlet to each pneumatic nozzle, a closing valve, a filter and a pressure regulator for both the water circuit and the air circuit:

| | Pneumatic spray drying nozzle |
| --- | --- |
| | Cut-off valve |
| | Filter |
| | Pressure regulator |
| | Air |
| | Liquid |

Pneumatic spray dryers, with a mixture of compressed air (or another gas) together with the liquid to be sprayed, produce a fine spray drying spray. The spray combination consists of a liquid nozzle and an air nozzle that determine the different flow rates and spray pattern. The air and the liquid to be sprayed can be mixed internally or externally.

When mixed internally, inside the nozzle the liquid is mixed with the air to produce a perfectly spray dried spray. When mixed externally, the liquid mixture is obtained outside the air nozzle.

External mixing is used more in liquids that are highly viscous, have a high density or that include the presence of small suspended particles.

The second hot air stream, the drying vehicle, is generated from a system of thermal solar panels. They directly or indirectly heat an atmospheric air stream entering tangentially, in favor of the stream, the crystallization chamber, perpendicular to the spray drying cloud, and this is what will capture the humidity of the microdroplets generated at the spray dryer outlet.

In the present invention, the hot air generated by the solar panels, carries the spray dried liquid inside the crystallization chamber, at the same time that it manages to evaporate the water present in it, while the stream that generates and carries the microdroplets comes from a low-pressure screw compressor. The low pressure compressor generates a volume of hot and dry air, which is used to generate and carry microdroplets from a size of 10 $\mu$m to 100 $\mu$m at the pneumatic spray dryer outlet. This cloud of microdroplets generated at the spray dryer outlet enters the crystallizer, perpendicular to the longitudinal axis of the crystallization chamber, through its upper part, being intimately mixed with the hot atmospheric air stream generated by the solar panels, entering tangentially through the upper part of the crystallizer, perpendicular to the outlet flow of the spray dryers, generating an air current that circulates helically inside the crystallization chamber, resulting in n turns (according to cylindrical height and inlet air speed).

As an example, the hot air carrying the spray dried liquid at the outlet of the pneumatic nozzle is generated in a compressor that produces a volume of hot air of 2,000 m$^3$/h at 1.5 bar, with an outlet temperature, after the cut-off valve, of 132 °C.

For compressor inlet air at 20°C and 60% RH, at the compressor outlet there is a flow rate of 2,000m$^3$/h at 1.5 bar and 132 °C, with RH < 0.1%.

This flow rate of hot and dry pressurized air will be used as a vehicle for generating droplets of liquid (solution/suspension) spray dried at the outlet of the pneumatic nozzle, which will join the dry air stream generated by the solar panels.

In this way and with the help of pneumatic spray nozzles (with internal or external mixing), there will be produced at the spray dryer inlet a mixture of air-droplets (suspension/solution) which will travel inside same, until reaching the lower part of the spray dryer, as a result of the flow rate of dry and hot air generated in the low-pressure compressor, together with the flow rate of dry and hot air generated by the solar panels, which will act as a drying vehicle, this last flow rate of hot and dry air tangentially entering the spray dryer (through its upper part) and which, as a result of entering tangentially, will accompany the cloud of droplets formed at the outlet of the nozzles for a time that will depend on the number of turns of each droplet before reaching the reactor outlet.

The residence time of the air-droplet mixture is calculated as:

$$t_{residence} = V_{spray\ drying\ chamber} / Q_{inlet\ air}$$

In conventional spray drying processes, the most commonly used spray dryer is the chamber with a conical base.

In this case, the spray drying is carried out on a cylindrical spray dryer, through its upper part, where the dry air flow from the system of parabolic elements enters tangentially, describing an elliptical path inside the spray drying reactor which makes it possible, before the air+droplets exit same, to travel around the perimeter of the reactor n times, n depending on the height of the spray drying reactor and on the air speed.

Hot air from parabolic elements

Feed

The solid generated inside the chamber of the spray dryer collected by installing a cyclone with tangential, helical, axial or spiral inlet.

The cyclone separates the solids dried inside the spray dryer from the air stream with greater or lesser efficiency, depending on the particle size, cyclone dimension, etc. The average dust loss in a normal high efficiency cyclone should not exceed 0.5%. However, environmental regulations could determine that this value is too high, therefore, a final cleaning of the air will be needed before it is released into the atmosphere.

Bag filters are normally used for the final cleaning of the air. In this case and as a second system for separating particles from the outlet air of the cyclone, a Venturi system (wet scrubbers) will be used, where the outlet air of the cyclone is accelerated at high speed to one of the Venturi inlets, while through the other one, a flow rate of the solution to be evaporated is circulated. The mixture of the liquid solution to be evaporated-air inside the Venturi allows the dust present in the air to be dissolved in the same solution stream to be treated. At the outlet of the Venturi, the air and the liquid are again separated, the air through the central conduit and the liquid through the lower outlet to return to the tank, one part fed by a recirculation pump and the other part as system purge to the spray drying system.

The feed solution stream that is recirculated in the Venturi system is loaded with solids to the point where it is purged together with the feed solution/suspension to the spray dryer, so that it is again spray dried with the fresh suspension/solution.

Advantages of operating with the proposed system:

1.: From an energetic viewpoint, in the wet scrubber, heat is recovered from the air emitted into the atmosphere, heating the suspension/solution to be spray dried, obtaining a higher energy efficiency of the process by needing a lower inlet air temperature to generate the same volume of solvent evaporated.

2.: The increase in the amount of dissolved solids generated in the wet scrubber produces lower heat consumption expressed in Kcal/Kg dry product.

3.: Increasing the temperature difference: $\Delta T$(Inlet-Outlet), with an outlet temperature reduction, reduces the heat needed to evaporate 1 kg of water or solvent.

4.: Effect of humidity: working with compressed and dry air (RH<0.1%) avoids having to dehumidify the air at the inlet. The water content of the thermal fluid used by other systems includes the evaporation water generated in the combustion of gas, fuel, etc., which should be removed, while in this case, the air is heated without any supply of combustion water.

5.: Effect of the temperature of the solution: By increasing the temperature of the solution to be treated, the heat required to produce a mass unit of dry product is reduced.

The operation of the spray separator is controlled by:

1. Temperature of the air at the spray dryer inlet and spray dryer outlet-cyclone inlet

2. RH of the air at the spray dryer and spray dryer outlet-cyclone inlet

3. Pressure of the air at the spray dryer inlet and spray dryer outlet-cyclone inlet

4. Air flow rate at the spray dryer inlet: pneumatic spray nozzles, direct stream from the compressor, tangential to the spray dryer inlet

5. Liquid/solution flow rate at the atomizer inlet: pneumatic spray nozzles

These are the 5 physical variables that allow control of the drying process, based on:

$$W_s = \frac{625P_a}{736(P+1.033)-P_a}$$

Wherein:

- $W_s$ is the saturation humidity expressed in g water vapor/kg dry air
- $P_a$ is the pressure of the water vapor at the desired temperature expressed in mmHg
- $P$ is the effective service pressure in kg/cm$^2$

Depending on the pressure inside the spraying/spray drying chamber expressed in kg/cm$^2$ and of the temperature in °C, the saturation humidity value inside the spraying/spray drying chamber is obtained, expressed in g $(H_2O)_v$/ kg dry air.

Thus, the control of the amount of solvent evaporated from the solution/suspension of inorganic/organic salts + organic matter will depend on the temperature and pressure inside the spray separator.

## Claims

1. A process for the treatment of aqueous solutions/suspensions loaded with organic/inorganic salts, organic matter, ammonia and hydrogen sulfide for the separation of the solvent (water or other organic solvent) and (organic/inorganic) salts + organic matter, wherein the first step consists of the separation of alkalinity and hydrogen sulfide by adding a mixed compound of calcium and iron salts in the form of a Ca$^{2+}$/Fe$^{3+}$ slurry, either as Ca(OH)$_2$ + Fe$_2$(SO$_4$)$_3$ and/or FeCl$_3$ or as CaO + Fe$_2$(SO$_4$)$_3$ and/or FeCl$_3$, working at final values of $9.5 \leq pH \leq 10.0$, which manages to separate the alkalinity by precipitation of CaCOs and the H$_2$S in the form of Fe$_2$S$_3$ together with part of the colloidal organic matter and part of the suspended solids.

2. The process for the treatment of aqueous solutions/suspensions loaded with organic/inorganic salts, organic matter, ammonia and hydrogen sulfide according to claim 1, wherein the proportion by weight percentage for the calcium and iron added as a slurry ranges from 50:50 to 99:1 in Ca:Fe, respectively.

3. The process for the treatment of aqueous solutions/suspensions loaded with organic/inorganic salts, organic matter, ammonia and hydrogen sulfide according to claim 1, wherein the addition of the mixed compound of calcium and iron salts in the form of a slurry to the aqueous solution/suspension is performed on a reactor, wherein two fractions are generated, a liquid fraction FL1 and a solid fraction FS1 rich in CaCOs, Fe$_2$S$_3$ and colloidal organic matter.

4. The process for the treatment of aqueous solutions/suspensions loaded with organic/inorganic salts, organic matter, ammonia and hydrogen sulfide according to claim 1, wherein the second step of treatment consists of the separation of phosphorus from FL1 by adding a mixed compound of calcium, aluminum and iron salts, either as Ca(OH)$_2$ + Al$_2$(SO$_4$)$_3$ and/or AlCl$_3$ + Fe$_2$(SO$_4$)$_3$ and/or FeCl$_3$ or as CaO + Al$_2$(SO$_4$)$_3$ and/or AlCl$_3$ + Fe$_2$(SO$_4$)$_3$ and/or FeCl$_3$ in the form of a slurry, working at final values of $10.0 \leq pH \leq 11.5$, which manages to separate the phosphorus present in the form of H$_2$PO$_4$$^-$/HPO$_4$$^{2-}$ by precipitation of CaHPO$_4$, together with part of the colloidal organic matter and part of the suspended solids.

5. The process for the treatment of aqueous solutions/suspensions loaded with organic/inorganic salts, organic matter, ammonia and hydrogen sulfide according to claim 4, wherein the proportion by weight percentage for calcium, aluminum and iron added on FL1 as a slurry ranges from 50:25:25 to 98:1:1 in Ca:Al:Fe, respectively.

6. The process for the treatment of aqueous solutions/suspensions loaded with organic/inorganic salts, organic matter, ammonia and hydrogen sulfide according to claim 4, wherein the addition of the mixed compound of calcium and iron salts to FL1 is performed on a reactor, in the form of a slurry, wherein two fractions are generated, a liquid fraction FL2 and a solid fraction FS2 rich in CaHPO$_4$ and colloidal organic matter.

7. The process for the treatment of aqueous solutions/suspensions loaded with organic/inorganic salts, organic matter, ammonia and hydrogen sulfide according to claim 1, wherein the third step of treatment consists of the treatment of the liquid fraction, FL2, output from step 2 by means of a system of membranes RO, RO1, wherein two fractions are obtained, a permeate fraction, P1, corresponding to a liquid solution with low conductivity and containing the same concentration of NH$_3$ as FL2, and a reject fraction, R1, wherein all the sodium, potassium, magnesium and ammonium salts are at $10.0 \leq pH \leq 11.5$.

8. The process for the treatment of aqueous solutions/suspensions loaded with organic/inorganic salts, organic matter, ammonia and hydrogen sulfide according to claim 7, wherein the fourth step of treatment consists of the neutralization of the permeate fraction obtained in RO1, P1, to $6.5 \leq pH \leq 7.0$, by using inorganic and/or organic acid. Work will be done with HCl, $H_2SO_4$, HNOs, $H_3PO_4$, etc., as inorganic acids, and with lactic acid, glycolic acid, oxalic acid, etc., as organic acids or mixtures of both.

9. The process for the treatment of aqueous solutions/suspensions loaded with organic/inorganic salts, organic matter, ammonia and hydrogen sulfide according to claim 8, wherein the permeate fraction obtained in RO1, P1, neutralized to $6.5 \leq pH \leq 7.0$, serves as feed for a second process of membranes RO, RO2, wherein two streams are obtained, a permeate stream, P2, corresponding to water with very low conductivity and without organic load and a reject fraction, R2, wherein, working at high pressures (70 to 84 bar), there is provided a neutral saline solution with a concentration close to 80g/l in only ammonium salts.

10. The process for the treatment of aqueous solutions/suspensions loaded with organic/inorganic salts, organic matter, ammonia and hydrogen sulfide according to claim 7, wherein fraction R1, neutralized to $6.5 \leq pH \leq 7.0$, serves as feed for a system of ultrafiltration membranes, UF1, wherein, working at a molecular weight cut-off of 10,000 to 100,000 Daltons, two streams are obtained, a reject stream, R3, containing high molecular weight organic matter as well as suspended solids, and a second permeate stream, P3, containing a neutral liquid solution with a saline concentration of about 80g/l and with the presence of soluble organic matter that will serve as feed for the crystallizer by aerosol emission.

11. The process for the treatment of aqueous solutions/suspensions loaded with organic/inorganic salts, organic matter, ammonia and hydrogen sulfide according to claim 10, wherein the reject fraction obtained in the UF plant, R3, is redirected to STEP 1.

12. The process for the treatment of aqueous solutions/suspensions loaded with organic/inorganic salts, organic matter, ammonia and hydrogen sulfide according to claim 1, wherein the sixth step corresponds to a spray drying/spraying process separately or by joining the two fractions, R2 and P3, by using pressurized air at low pressure generated in a compressor as a vehicle for thermal fluid spray drying and a generator of 1 to 100$\mu$m droplets.

13. A spray drying process for the treatment of aqueous solutions/suspensions loaded with organic/inorganic salts and organic matter according to claim 12, **characterized by** the use of pneumatic spray nozzles (internal or external mixing) for the generation of fine droplets of 1 to 100$\mu$m from the solution/suspension to be treated and the pressurized air at low pressure, from 1 to 5 bar, coming from a compressor.

14. The spray drying process for the treatment of aqueous solutions/suspensions loaded with organic/inorganic salts and organic matter according to claim 13, wherein the liquid mixture of the solution/suspension generated in the pneumatic spray nozzles and the hot and dry air generated in the compressor is sent into a cylindrical spray chamber with a flat base, said stream entering perpendicular to the longitudinal axis of the spray drying chamber, through its upper part.

15. The spray drying process for the treatment of aqueous solutions/suspensions loaded with organic/inorganic salts and organic matter according to claim 12, **characterized by** the use of hot air generated in a parabolic solar system as a vehicle for drying the fine 1 to 100$\mu$m droplets generated at the outlet of the spray drying nozzles.

16. The spray drying process for the treatment of aqueous solutions/suspensions loaded with organic/inorganic salts and organic matter according to claim 15, wherein the hot air stream generated in a parabolic solar system enters the spray drying chamber through its upper part, tangentially, perpendicular to the spray drying cloud of the nozzles, generating a hot and dry helical air stream surrounding the microdroplets generated in the spray dryers, resulting in n turns inside the spray drying chamber, with n depending on the length of the chamber and the hot air inlet speed.

17. The spray drying process for the treatment of aqueous solutions/suspensions loaded with organic/inorganic salts and organic matter according to claim 14, wherein the mixture of the solution/suspension generated in the spray nozzles and the hot and dry air generated in the parabolic solar system and sent into a cylindrical spray drying chamber with a flat base generate, at the spray dryer outlet, a volume of hot and humid air together with crystallized solids which are collected and separated in a cyclone at the spray drying chamber outlet.

18. The spray drying process for the treatment of aqueous solutions/suspensions loaded with organic/inorganic salts and organic matter according to claim 17, wherein the hot and humid air that exits the cyclone enters a Venturi-type wet

EP 4 491 588 A1

separator, where smaller sized solid particles are retained.

19. The spray drying process for the treatment of aqueous solutions/suspensions loaded with organic/inorganic salts and organic matter according to claim 18, wherein the Venturi-type wet separator directs the liquid concentrate of solids retained therein, in saturation, back into the liquid feed stream for the spray dryer.

10

# FIG. 1

**STEP 1:** SEPARATION OF ALKALINITY AND $H_2S$

DIGESTATE, LIQUID MANURE, LEACHATES, ETC.

R3: UF reject TO STEP 1

Ca/Fe slurry

Reactor 1

Ca/Fe/Al slurry

Solid fraction 1: FS1
$CaCO_3$
$Fe_2S_3$
$CaSO_4$
Colloidal organic matter

FL1: Liquid fraction 1 to STEP 2

**STEP 2:** SEPARATION OF PHOSPHORUS

Reactor 2

Solid fraction 2: FS2
$CaHPO_4$
Colloidal organic matter

FL2: Liquid fraction 2 to STEP 3

EP 4 491 588 A1

# EP 4 491 588 A1

## INTERNATIONAL SEARCH REPORT

| International application No |
|---|
| PCT/ES2023/070136 |

**A. CLASSIFICATION OF SUBJECT MATTER**

INV. C02F9/00    B01D1/16
ADD. C02F1/04    C02F1/14    C02F1/44    C02F1/52    C02F1/66
     C02F101/10  C02F101/16  C02F103/06  C02F1/12

According to International Patent Classification (IPC) or to both national classification and IPC

**B. FIELDS SEARCHED**

Minimum documentation searched (classification system followed by classification symbols)

C02F    F17C    B01D

Documentation searched other than minimum documentation to the extent that such documents are included in the fields searched

Electronic data base consulted during the international search (name of data base and, where practicable, search terms used)

EPO-Internal, WPI Data

**C. DOCUMENTS CONSIDERED TO BE RELEVANT**

| Category* | Citation of document, with indication, where appropriate, of the relevant passages | Relevant to claim No. |
|---|---|---|
| X | US 7 815 804 B2 (OTV SA S A [FR]) 19 October 2010 (2010-10-19) figures 1-3 column 1, line 6 – column 8, line 5 ----- | 1-12 |
| X | WO 2013/143506 A1 (BOYING XIAMEN SCI & TECH CO [CN]; ZHANG SHIWEN [CN]) 3 October 2013 (2013-10-03) figure 1 paragraph [0001] – paragraph [0132] ----- | 1-12 |
| A | CN 108 033 637 A (ZHEJIANG BESTWA ENVIRONMENTAL PROTECTION TECH CO LTD) 15 May 2018 (2018-05-15) the whole document ----- | 1-12 |
| X | US 5 651 895 A (GORDON RONNIE D [US]) 29 July 1997 (1997-07-29) column 1, line 10 – column 6, line 30 ----- | 1-12 |

☐ Further documents are listed in the continuation of Box C.   ☒ See patent family annex.

\* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance;; the claimed invention cannot be considered novel or cannot be considered to involve an inventive step when the document is taken alone

"Y" document of particular relevance;; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 23 May 2023 | 26/07/2023 |

| Name and mailing address of the ISA/ European Patent Office, P.B. 5818 Patentlaan 2 NL - 2280 HV Rijswijk Tel. (+31-70) 340-2040, Fax: (+31-70) 340-3016 | Authorized officer Zsigmond, Zoltán |

Form PCT/ISA/210 (second sheet) (April 2005)

13

## INTERNATIONAL SEARCH REPORT

International application No.
**PCT/ES2023/070136**

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:

**see additional sheet**

1. ☐ As all required additional search fees were timely paid by the applicant, this international search report covers all searchable claims.

2. ☐ As all searchable claims could be searched without effort justifying an additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims;; it is covered by claims Nos.:

   **1-12**

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (April 2005)

## INTERNATIONAL SEARCH REPORT
Information on patent family members

| International application No |
| --- |
| PCT/ES2023/070136 |

| Patent document cited in search report | | Publication date | Patent family member(s) | | Publication date |
| --- | --- | --- | --- | --- | --- |
| US 7815804 | B2 | 19-10-2010 | AU | 2007333057 A1 | 19-06-2008 |
| | | | BR | PI0720039 A2 | 24-12-2013 |
| | | | CA | 2671928 A1 | 19-06-2008 |
| | | | CN | 101646480 A | 10-02-2010 |
| | | | EA | 200970576 A1 | 30-12-2009 |
| | | | EP | 2091636 A1 | 26-08-2009 |
| | | | KR | 20080054335 A | 17-06-2008 |
| | | | MX | 283613 B | 23-02-2011 |
| | | | US | 2008135478 A1 | 12-06-2008 |
| | | | US | 2011023715 A1 | 03-02-2011 |
| | | | WO | 2008073963 A1 | 19-06-2008 |
| | | | ZA | 200904023 B | 25-08-2010 |
| WO 2013143506 | A1 | 03-10-2013 | CN | 102786183 A | 21-11-2012 |
| | | | WO | 2013143506 A1 | 03-10-2013 |
| CN 108033637 | A | 15-05-2018 | NONE | | |
| US 5651895 | A | 29-07-1997 | NONE | | |

Form PCT/ISA/210 (patent family annex) (April 2005)

15

International Application No. PCT/ES2023/070136

**FURTHER INFORMATION CONTINUED FROM   PCT/ISA/   210**

This International Searching Authority found multiple (groups of) inventions in this international application, as follows:

    1. claims: 1-12

        A process for water treatment comprising adding multiple precipitation agents to the water to remove $CaCO_3$ and $Fe_2S_3$ at alkali pH

             ---

    2. claims: 13-19

        A spray drying process for treatment of aqueous solutions / suspensions with a pneumatic spray nozzle

             ---

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 5632100 A
- WO 9714288 A

- DK 9900304

**Non-patent literature cited in the description**

- **MASTERS**. Keath: Spray Drying Handbook. Longman Scientific&Technical, 1991